# EUROPÄISCHE PATENTSCHRIFT

(11) **EP 1 052 143 B1**
(45) Veröffentlichungstag und Bekanntmachung des Hinweises auf die Patenterteilung: **04.07.2007**
(21) Anmeldenummer: 00108242.9
(22) Anmeldetag: 14.04.2000
(51) Int. Cl.: B60Q 1/52, G01S 13/93

(54) **Leithilfe bei einem Fahrspurwechsel eines Kraftfahrzeuges**
Driving assistance for vehicle lane changing
Aide à la conduite pour véhicule changeant de file

(30) Priorität: 08.05.1999 DE 19921449
(43) Veröffentlichungstag der Anmeldung: 15.11.2000
(73) Patentinhaber: DaimlerChrysler AG, 70327 Stuttgart (DE)
(72) Erfinder: Bernhard, Werner, 70794 Filderstadt (DE); Regensburger, Uwe, Dr., 73760 Ostfildern (DE); Knöppel, Carsten, 70327 Stuttgart (DE); Nöcker, Gerhard, 73033 Göppingen (DE)

(56) Entgegenhaltungen:
- EP-A- 0 591 743
- DE-C1- 19 507 957
- DE-C1- 19 526 452

## Beschreibung

Die Erfindung betrifft eine Leithilfe bei einem Fahrspurwechsel eines Kraftfahrzeugs gemäß den gattungsbildenden Merkmalen des Anspruchs 1.

Eine gattungsgemäße Leithilfe ist beispielsweise in der DE 43 13 568 C1 offenbart. Es wird ein Verfahren zur Leithilfe für einen Fahrspurwechsel von einer Momentanspur auf eine benachbarte Zielspur durch ein Kraftfahrzeug beschrieben. Hierbei wird der Vorraum und der Rückraum wenigstens der benachbarten Zielspur für den gewünschten Spurwechsel überwacht, die Abstände von dort detektierten Objekten, insbesondere Fahrzeugen, und deren Geschwindigkeiten gemessen sowie daraus Sicherheitsabstande berechnet. Wenn alle gemessenen Abstände größer als die errechneten Sicherheitsabstände sind, wird dies als möglicher Spurwechsel erkannt. Der Fahrer wird dadurch weitestgehend von Überwachungsaufgaben und einem Schätzen von Abständen und Geschwindigkeiten nachfolgender und vorausfahrender Fahrzeuge entlastet. Diese Leithilfe dient bevorzugt zum Überholen und Einfädeln auf eine benachbarte Fahrspur.

In der DE 195 26 452 C1 ist eine Einrichtung zur Seitenrückraumüberwachung offenbart, mit einer Objekterfassungeinheit zur Erfassung von Objekten in einem Seitenrückraumbereich, einer Warnanzeigeeinheit in Abhängigkeit von den Signalen der Objekterfassungseinheit und einer erkannten Fahrspurwechselanforderung zur Abgabe eines Warnsignals aktiviert. Die Auswerteeinheit bestimmt ob sich ein Objekt in einem rückwärtig darüber hinausreichenden Seitenrückraumabschnitt mit größerer Geschwindigkeit als das eigene Fahrzeug bewegt, und aktiviert bejahendenfalls die Warnanzeige zur Abgabe eines Warnsignals, wenn sie zusätzlich eine zu diesem Seitenbereich gehörige Fahrspurwechselanforderung erkennt. Fahrspurwechselanforderungen werden bevorzugt über die Blinkgeberstellung oder die Lenkwinkeleinstellung erkannt.

Die DE 195 07 957 C1 offenbart ein Fahrzeug mit optischer Abtasteinrichtung für einen seitlichen Fahrbahnbereich. Das Fahrzeug beinhaltet als optische Abtasteinrichtung mehrere nebeneinander angeordnete Infrarot-Sendeelemente und ein zugehöriges CCD-Array sowie eine nachgeschaltete Auswerteeinheit, die sowohl für Kontrastbestimmung und Konturenerkennung eingerichtet ist. Mit diesem System wird die Fahrbahnoberfläche abgetastet, um eine jeweilige Fahrbahnbegrenzung ermitteln zu können. Die Laufzeit- und Kontrastbestimmung erlaubt die Erkennung seitlicher Fahrspurmarkierungen und die Bestimmung des jeweiligen Fahrzeugabstands von solchen Markierungen.

Bei dieser Art der Leithilfe für einen Fahrspurwechsel von einer Momentanspur auf eine benachbarte Zielspur durch ein Fahrzeug ist von Nachteil, daß das Folgefahrzeug zwar mit Hilfe einer Seitenrückraumüberwachung erkannt wird, das System aber nicht in der Lage ist eine genaue Zuordnung des Folgefahrzeugs auf eine Fahrspur anzugeben. Dies führt insbesondere bei kurvigen Streckenverläufen, bei welchen ein auf derselben Fahrspur befindliches Folgefahrzeug von der Seitenrückraumüberwachung detektiert wird, zur Erkennung des Folgefahrzeuges als Spurwechselhindernis, obwohl es kein Spurwechselhindernis darstellt.

Der Erfindung liegt daher die Aufgabe zugrunde, eine gattungsgemäße Leithilfe für einen Fahrspurwechsel durch ein Kraftfahrzeug derart weiterzubilden, daß eine exaktere und damit zuverlässigere Unterstützung des Fahrers bei einem Fahrspurwechsel erfolgt.

Erfindungsgemäß wird die Aufgabe durch die Merkmale des Anspruchs 1 gelöst. Vorteilhafte Aus- und Weiterbildungen des Erfindungsgegenstandes sind durch die Merkmale der Unteransprüche gekennzeichnet.

Ein wesentlicher Vorteil dieser Ausgestaltungen liegt darin, daß die Leithilfe für einen Fahrspurwechsel genau unterscheiden kann, ob sich das Folgefahrzeug auf der Zielspur befindet. Dies ist insbesondere bei einer kurvenreichen Streckenführung von Vorteil, da ein Folgefahrzeug, das sich auf derselben Fahrspur wie das Fahrzeug befindet, aber von der Seitenrückraumüberwachungseinrichtung erkannt wird, von der Leithilfe richtig eingeordnet und folglich keine Warneinrichtung aktiviert wird. Ein Fahrspurwechsel kann in diesem Fall erfolgen, obwohl die Seitenrückraumüberwachungseinrichtung das Folgefahrzeug detektiert.

Die Erfindung wird anhand eines Ausführungsbeispieles in Verbindung mit einer Figurenbeschreibung näher erläutert. Es zeigt
- Fig. 1: einen Ablaufplan einer rechnergesteuerten Leithilfe für einen Fahrspurwechsels,
- Fig. 2: eine schematische Darstellung einer kurvigen Fahrspur mit Fahrzeug und Folgefahrzeug.

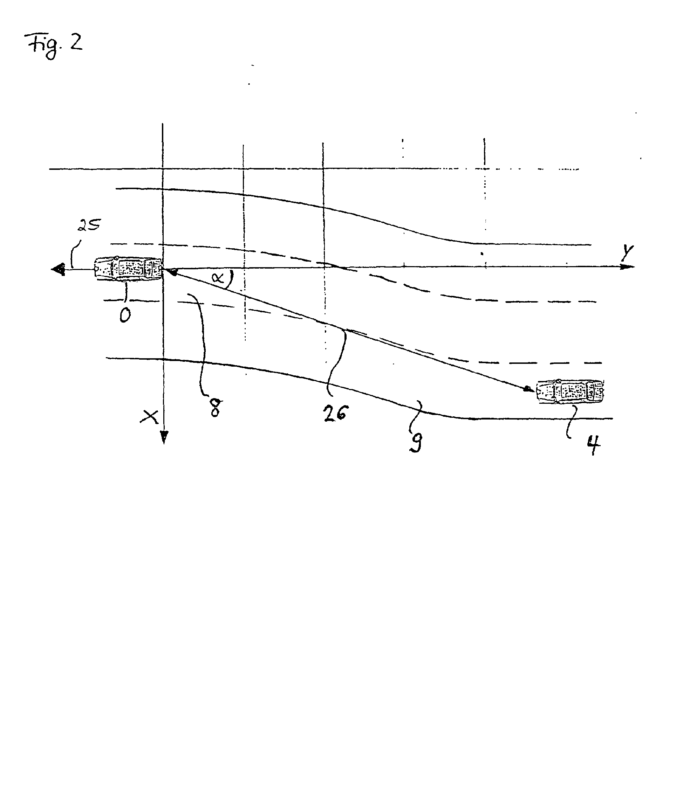

In der Fahrbahndarstellung in Fig. 2 ist jeweils ein eigenes Fahrzeug 0 auf einer momentanen Fahrspur 8 gezeigt, sowie ein nachfolgendes Fahrzeug 4 auf einer Zielspur 9 gezeigt, wobei die Fahrtrichtung jeweils durch den Pfeil 25 angegeben ist. Der Abstand der beiden Fahrzeuge 0, 4 wird durch den Pfeil 26 bezeichnet. Die Fahrspur liegt in einem X/Y-Koordinatensystem. Fahrspurerkennungseinrichtung weist Detektoren auf, die bevorzugt auf der rechten und linken Seite des Fahrzeuges angeordnet sind und nach unten auf den Boden der Fahrspur gerichtet sind und so die Fahrspur abtasten. Die Detektoren der Objekterfassungseinheit sind bevorzugt in den beiden Außenspiegeln integriert, wobei der rechte Detektor den rechten hinteren Seitenrückraum und der linke Detektor den linken hinteren Seitenrückraum aufnimmt.

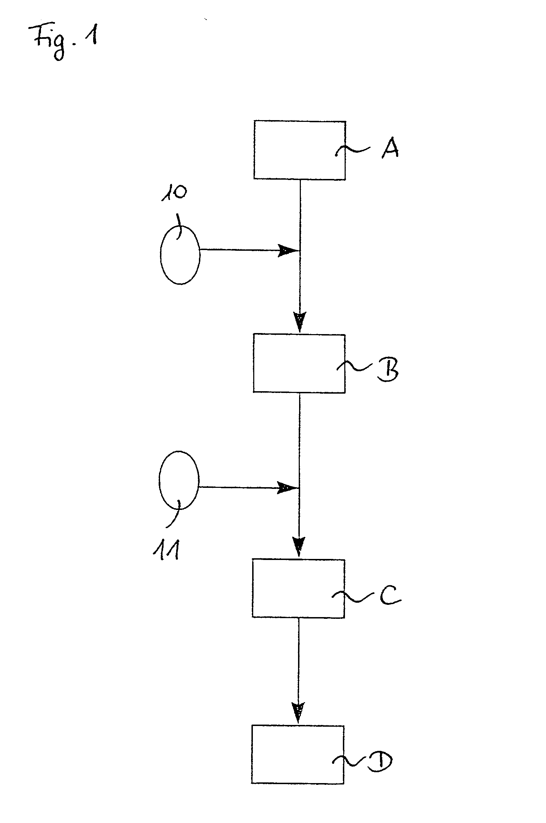

Die Funktionsweise des Verfahrens zur rechnergestützten Leithilfe für einen Fahrspurwechsel von der Momentanspur 8 auf die benachbarte Zielspur 9, die im gezeigten Fall eine in Fahrtrichtung links von der Momentanspur 8 liegende Überholspur darstellt, durch das eigene Fahrzeug 0 wird im folgenden unter Bezugnahme auf den Ablauf der Fig. 1 ausführlich erläutert.

Die Leithilfe wird eingeleitet durch einen Aktivierungsschritt 10, der durch eine Betätigung eines Fahrtrichtungsanzeigehebels gebildet wird. Die Aktivierung des System erfolgt somit gleichzeitig mit dem Auslösen des Fahrtrichtungsanzeigers. Als Alternative kann vorgesehen sein, daß die Aktivierung der Leithilfe durch ein bloßes Antippen des Fahrtrichtungsanzeigehebels erfolgt, ohne daß bereits die Fahrtrichtungsanzeige ausgelöst wird, so daß die anderen Verkehrsteilnehmer nicht durch die Absicht eines möglicherweise augenblicklich noch gar nicht realisierbaren Spurwechsels irritiert werden.

Zuerst wird in A der Wegverlauf des eigenen Fahrzeuges ermittelt. Hierzu werden die Fahrspuren mit der Fahrspurerkennungseinrichtung abgetastet und mit einer Aufnahmeeinheit der zurückgelegte Wegverlauf mit Hilfe der Kurvenradien zusammen mit der Wegstrecke aufgenommen. In B erfolgt dann eine Bestimmung des Umfeldes des eigenen Fahrzeuges, wobei mit der Fahrspurerkennung die Position des eigenen Fahrzeuges zur eigenen Fahrspur und bei mehrspuriger Fahrbahn zu weiteren Fahrspuren bestimmt wird. Diese Daten können abschnittsweise mit der Aufnahmeeinheit gespeichert werden. Mit der Objekterfassungseinzichtung wird der Seitenrückraum überwacht, wobei ein Folgefahrzeug 4, das sich im überwachten Seitenrückraum befindet, detektiert wird. Hierzu sind bevorzugt an beiden Außenspiegeln Detektoren angeordnet, die den rechten und linken Rückraum abtasten. In C erfolgt eine relative Lagezuordnung des detektierten Objektes, wobei von dem gegenwärtigen Standort des eigenen Fahrzeuges 0 aus über den Winkel α und den Abstand 26 des Schwerpunktes des Objektes 4 und den gespeicherten Wegverlauf des eigenen Fahrzeugs 0 bis zu diesem Objekt 4, auch die Lagezuordnung dieses Objektes, also des Folgefahrzeuges 4, relativ zum eigenen Fahrzeug 0 ermittelt wird. So erfolgt eine Zuordnung des Folgefahrzeuges 4 auf eine Fahrspur. Wenn sich das Folgefahrzeug 4 auf der Zielspur 9 befindet, erfolgt in D die Aktivierung einer Warnanzeige im Fahrzeug, die dem Fahrer anzeigt, daß ein Fahrspurwechsel nicht möglich ist. Im folgenden soll eine ausführliche Beschreibung dieser Punkte erfolgen:

In A wird der Wegverlauf des eigenen Fahrzeuges bestimmt: Die Aufzeichnung des Wegverlaufes kann über die Kurvenradien (z.B. mit einem Lenkwinkel-Sensor und/oder aus dem elektronischen Stabilitätsprogramm (ESP- und/oder ABS-Signal) erfolgen. Aus diesen Daten ist abschnittsweise, mindestens nach jeder Änderung eines der Signale (Kurvenradius bzw. Wegstrecke), der Betrag in Längs- und Querrichtung zu ermitteln (in X/Y-Koordinaten umrechnen). Mit diesen Wegedaten wird ein zweidimensionales Modell aufgebaut/aktualisiert und beispielsweise in einer zweidimensionalen Tabelle gespeichert. In einer möglichen Ausführung liegt die X-Koordinate quer zur Fahrtrichtung, die Y-Koordinate in Längsrichtung. Nach jedem Streckenabschnitt und nach jeder Änderung des Kurvenradius ist der Betrag in Längs- und Querrichtung neu zu ermitteln. Die Speicherung des vom Fahrzeug zurückgelegten Wegverlaufs erfolgt über den Erfassungsbereich der Detektoren der Objekterfassungseinheit. Der geschwindigkeitsabhängige seitliche Schlupf auf einer geneigten Fahrbahn oder in der Kurve muß durch Gegenlenken ausgeglichen werden. Hiermit wird -mit dem Lenkwinkelsensor- ein scheinbarer, größerer oder kleinerer Kurvenradius erzeugzt. Anstelle des Lenkwinkelsignals ist mit den Signalen der Raddrehzehlsensoren eine präzisere Erkennung der Kurvenradien erreichbar. Die Erfassung der unterschiedlichen Wegstrecke zwischen innerem und äußerem Rad ist auch mit anderen Methoden wie Radar- oder Infrarot-Verfahren denkbar. Zur Unterstützung kann der Wegverlauf des eigenen Fahrzeugs auch mit Hilfe satellitenunterstützter Verfahren wie GPS (Global Positioning System) erfolgen. In ein Navigationssystem sind die Karten des durchfahrenen Gebietes mittels CD-Rom einlesbar, die den genauen Straßenverlauf beinhalten. Die momentane Lage des eigenen Fahrzeugs auf der Straße wird unterstützend mittels GPS ermittelt.

B Bestimmung des Umfeldes des eigenen Fahrzeuges 0: Mit einer Positionserfassungseinrichtung wird die Position des eigenen Fahrzeuges 0 zur eigenen Fahrspur 8 und zu weiteren Fahrspuren oder zum Straßenrand ermittelt. Die Aufnahme der Straßengeometrie kann mit Hilfe einer Fahrspurerkennungseinrichtung erfolgen. Hierbei wird unterschieden zwischen durchgezogener und gestrichelter Linie. Außerdem wird eine Abbiegespur und Richtungspfeile erkannt. Die hierbei ermittelten Straßengeometriedaten werden gespeichert und bis zum Erfassungsbereich der Detektoren nach hinten weitergereicht und zur Ermittlung des Straßenverlaufs im Rückraum herangezogen. Die Erfassung des Straßenverlaufs vor dem Fahrzeug 0 kann zur Ermittlung des Straßenverlaufs im Rückraum zusätzlich herangezogen werden. Hierzu sind Detektoren am Fahrzeug angeordnet, die den Raum vor dem Fahrzeug abtasten.

In 11 wird mittels Objekterfassungseinheit das Folgefahrzeug 4 detektiert. Die relative Lagezuordnung des detektierten Fahrzeuges 4 wird in C erfaßt: Die Relativgeschwindigkeit und der Abstand 26 des von der Objekterfassungseinheit detektierten, nachfolgenden Fahrzeuges 4 wird von der Auswerteeinheit bestimmt. Die Richtung des Fahrzeuges 4 und daraus der Winkel zum eigenen Fahrzeug wird über Radarsensoren oder Infrarotsensoren ermittelt. Alternativ oder zusätzlich kann mit optischen Sensoren und Bildverarbeitung durch direkte Detektion des Fahrzeuges 4 der Winkel α und der Abstand 26 ermittelt werden oder es wird der Abstand in Längs- und Querrichtung als x/y-Wert ermittelt. Es wird von dem gegenwärtigen Standort des eigenen Fahrzeuges 0 über den Winkel α und Abstand des Schwerpunktes des Fahrzeuges 4 und den gespeicherten Straßenverlauf des eigenen Fahrzeugs 0 bis zum Folgefahrzeug 4, die Lagezuordnung des Folgefahrzeuges 4 relativ zur Straße ermittelt. Dazu ist der Winkel α und der Abstand 26 des Fahrzeuges 4 in das Koordinatensystem des Wegverlaufs umzurechnen. Der Wert X des Fahrzeuges 4 im Abstand Y ist mit dem Wert X des Weges im gleichen Abstand Y zu vergleichen. Dieser Vergleich liefert die Information der Wegezuordnung des Fahrzeuges. Bei identischen X-Werten befindet sich das Folgefahrzeug 4 auf der Momentanspur 8, derselben Fahrspur 8 wie das Fahrzeug 0 selbst. Liegt der X-Wert des Fahrzeuges 4 um eine Straßenbreite nach links oder rechts versetzt, so wird dieses Fahrzeug 4 der entsprechenden Nachbarspur 9 zugeordnet. In D erfolgt im Gefahrenfall, das heißt wenn der Abstand 26 kleiner als ein vorgegebener Sicherheitsabstand ist, die Ausgabe eines Warnsignals, das durch vorzeitige Erkennung eines Spurwechsels, beispielsweise durch Umgebungserkennung und/oder Setzen eines Blinkersignals aktiv geschaltet wird, wenn das Folgefahrzeug 4 der Zielspur 9 zugeordnet wird. Die Warnanzeige ist bevorzugt in das Spiegelglas des Außenspiegels integriert. Als Warnsignal kann beispielsweise ein rotes Dreieck im Außenspiegel aufblinken. Andere Warnsignale, beispielsweise ein akkustischer Signalton sind ebenfalls möglich.

## Patentansprüche

1. Leithilfe bei einem Fahrspurwechsel eines Fahrzeugs (0) mit einer Objekterfassungseinheit zur Erfassung von Objekten (4) in einem Seitenrückraumbereich des Fahrzeugs (0), einer Warnanzeigeeinheit und einer Auswerteeinheit, die mit Hilfe der ihr von der Objekterfassungseinheit zugeführten Signale bestimmt, ob sich ein Objekt (4) im Totwinkelabschnitt des überwachten Seitenrückraums befindet oder sich ein Objekt (4) in einem über den Totwinkelabschnitt rückwärtig hinausreichenden Abschnitt des überwachten Seitenrückraums mit größerer Geschwindigkeit als das eigene Fahrzeug (0) vorwärts bewegt, und bejahendenfalls die Warnanzeigeeinheit zur Abgabe eines Warnsignals aktiviert, wenn sie außerdem eine zum entsprechenden Seitenbereich gehörige Fahrspurwechselanforderung erkennt,
**dadurch gekennzeichnet,**
**daß** eine Positionserfassungseinrichtung vorgesehen ist, die Wegdaten des Fahrzeuges (0) und Straßengeometriedaten ermittelt, um die Position des eigenen Fahrzeuges (0) auf der Straße zu bestimmen und wenn die Objekterfassungseinheit ein Folgefahrzeug (4) im Seitenrückraum detektiert, wird entsprechend des mit der Positionserfassungseinrichtung aufgezeichneten zurückgelegten Wegverlaufs und der Straßengeometrie eine Lagezuordnung des Folgefahrzeugs (4) relativ zur Straße ermittelt.

2. Leithilfe bei einem Fahrspurwechsel nach Anspruch 1,
**dadurch gekennzeichnet,**
**daß** wenn sich bei einer Lagezuordnung das Folgefahrzeug (4) auf der Zielspur (9) des Fahrzeuges (0) befindet, die Warnanzeigeeinheit zur Abgabe eines Warnsignals aktiviert wird.

3. Leithilfe bei einem Fahrspurwechsel nach den Ansprüchen 1 und 2,
**dadurch gekennzeichnet,**
**daß** als Warnsignal das Aufleuchten eines roten Warndreiecks im Seitenspiegel vorgesehen ist.

4. Leithilfe bei einem Fahrspurwechsel nach den Ansprüchen 1 bis 3,
**dadurch gekennzeichnet,**
**daß** eine Speicherung der Weg- und Straßengeometriedaten über den Erfassungsbereich der Objekterfassungseinheit erfolgt.

5. Leithilfe bei einem Fahrspurwechsel nach den Ansprüchen 1 bis 4,
**dadurch gekennzeichnet,**
**daß** die Straßengeometriedaten mit optischen Sensoren erfaßt werden.

6. Leithilfe bei einem Fahrspurwechsel nach den Ansprüchen 1 bis 5,
**dadurch gekennzeichnet,**
**daß** die Wegdaten aus einem Weg-/Geschwindigkeitssignal und/oder Lenkwinkel- und/oder Raddrehzahlsensoren und/oder satellitenunterstützt mittels GPS bestimmt wird.

7. Leithilfe bei einem Fahrspurwechsel nach den Ansprüchen 1 bis 6,
**dadurch gekennzeichnet,**
**daß** eine Aktivierung (10) der Leithilfe erst durch die Anforderung einer Fahrtrichtungsanzeige erfolgt und die angeforderte Fahrtrichtungsanzeige erst erfolgt, wenn ein möglicher Spurwechsel signalisiert wird.

8. Leithilfe bei einem Fahrspurwechsel nach den Ansprüchen 1 bis 7,
**dadurch gekennzeichnet,**
**daß** das Fahrzeug (4) der entsprechenden Nachbarspur (9) zugeordnet wird, wenn das Fahrzeug (4) um eine Straßenbreite nach links oder rechts versetzt ist.

## Claims

1. Lane-change guiding aid for a vehicle (0), having an object sensing unit for sensing objects (4) in a rear side spatial region of the vehicle (0), a warning display unit and an evaluation unit which uses the signals fed to it by the object sensing unit to determine whether an object (4) is located in the dead angle section of the monitored side rear space or an object (4) in a section of the monitored side rear space which extends outward to the rear over the dead angle section is moving forward at a higher speed than the driver's own vehicle (0), and if this is the case it activates the warning display unit to output a warning signal if it also detects a lane change request which is associated with the corresponding side region, **characterized in that** a position sensing device is provided which determines route data of the vehicle (0) and road geometry data in order to determine the position of the driver's own vehicle (0) on the road, and if the object sensing unit detects a following vehicle (4) in the side rear space, a position assignment of the following vehicle (4) relative to the road is determined in accordance with the course of the route travelled along and the road geometry which are indicated with the position sensing device.

2. Lane-change guiding aid according to Claim 1, **characterized in that** if, when a position is assigned, the following vehicle (4) is located on the target lane (9) of the vehicle (0), the warning display unit is activated to output a warning signal.

3. Lane-change guiding aid according to Claims 1 and 2, **characterized in that** the illumination of a red warning triangle in the side mirror is provided as a warning signal.

4. Lane-change guiding aid according to Claims 1 to 3, **characterized in that** the route geometry data and road geometry data relating to the coverage area of the object sensing unit is stored.

5. Lane-change guiding aid according to Claims 1 to 4, **characterized in that** the road geometry data is sensed with optical sensors.

6. Lane-change guiding aid according to Claims 1 to 5, **characterized in that** the route data is determined from a route/speed signal and/or steering angle and/or wheel speed sensors and/or in a satellite-supported fashion by means of GPS.

7. Lane-change guiding aid according to Claims 1 to 6, **characterized in that** the guiding aid is actuated (10) only by the request of a driving direction display, and the requested driving direction display does not take place until a possible lane change is signalled.

8. Lane-change guiding aid according to Claims 1 to 7, **characterized in that** the vehicle (4) is assigned to the corresponding adjacent lane (9) if the vehicle (4) is moved to the left or right by a distance equivalent to the width of the road.

## Revendications

1. Aide à la conduite pour un véhicule (0) changeant de file, avec une unité de détection d'objets pour détecter des objets (4) dans une région d'espace arrière latéral du véhicule (0), une unité indicatrice d'avertissement et une unité d'évaluation qui, à l'aide des signaux qui lui sont apportés par l'unité de détection d'objets, détermine si un objet (4) se trouve dans la partie d'angle mort de l'espace arrière latéral surveillé ou si un objet (4) se déplace vers l'avant, dans une partie de l'espace arrière latéral surveillé s'étendant vers l'arrière au-delà de la partie d'angle mort, à une vitesse supérieure au propre véhicule (0), et qui dans l'affirmative active l'unité indicatrice d'avertissement pour délivrer un signal d'avertissement si elle discerne en outre une requête de changement de file concernant la région latérale correspondante,
**caractérisée en ce qu'**il est prévu un dispositif de détection de position qui relève des données de trajectoire du véhicule et des données de géométrie de la chaussée pour déterminer la position du propre véhicule (0) sur la chaussée, et qui, si l'unité de détection d'objets détecte un véhicule suiveur (4) dans l'espace arrière latéral, détermine en fonction de la géométrie de la chaussée et de la trajectoire parcourue enregistrée par le dispositif de détection de position une affectation de position du véhicule suiveur (4) par rapport à la chaussée.

2. Aide à la conduite pour véhicule changeant de file selon la revendication 1, **caractérisée en ce que**, si lors d'une affectation de position le véhicule suiveur (4) se trouve dans la file de destination (9) du véhicule (0), l'unité indicatrice d'avertissement est activée pour délivrer un signal d'avertissement.

3. Aide à la conduite pour véhicule changeant de file selon les revendications 1 et 2, **caractérisée en ce qu'**il est prévu comme signal d'avertissement l'allumage d'un triangle avertisseur rouge dans le rétroviseur latéral.

4. Aide à la conduite pour véhicule changeant de file selon les revendications 1 à 3, **caractérisée en ce qu'**on effectue une mémorisation des données de trajectoire et de géométrie de la chaussée sur la plage de détection de l'unité de détection d'objets.

5. Aide à la conduite pour véhicule changeant de file selon les revendications 1 à 4, **caractérisée en ce que** les données de géométrie de la chaussée sont détectées par des capteurs optiques.

6. Aide à la conduite pour véhicule changeant de file selon les revendications 1 à 5, **caractérisée en ce que** les données de trajectoire sont déterminées à partir d'un signal de trajectoire/vitesse et/ou de capteurs d'angle de direction et/ou de vitesse de rotation de roue et/ou avec assistance par satellite au moyen du système GPS.

7. Aide à la conduite pour véhicule changeant de file selon les revendications 1 à 6, **caractérisée en ce que** l'activation (10) de l'aide à la conduite s'effectue seulement par la requête d'une indication de sens de marche et l'indication requise de sens de marche s'effectue seulement si un changement de file possible est signalé.

8. Aide à la conduite pour véhicule changeant de file selon les revendications 1 à 7, **caractérisée en ce que** le véhicule (4) est affecté à la file voisine correspondante (9) si le véhicule (4) est décalé d'une largeur de chaussée vers la gauche ou la droite.
